# FASCICULE DE BREVET EUROPEEN

(11) **EP 3 897 135 B1**
(45) Date de publication et mention de la délivrance du brevet: **07.12.2022**
(21) Numéro de dépôt: 19848881.9
(22) Date de dépôt: 19.12.2019
(51) Int. Cl.: A01N 25/10, A01N 33/12, A01N 43/90, A01N 59/20, A01P 3/00

(54) **PROCÉDÉ DE PRÉPARATION D'UN MATÉRIAU BIOCIDE, BACTÉRICIDE ET/OU BACTÉRIOSTATIQUE**
VERFAHREN ZUR HERSTELLUNG EINES BIOZIDEN, BAKTERIOZIDEN UND/ODER BAKTERIOSTATISCHEN MATERIALS
METHOD FOR PREPARING A BIOCIDAL, BACTERIOCIDAL AND/OR BACTERIOSTATIC MATERIAL

(30) Priorité: 19.12.2018 FR 1873328
(43) Date de publication de la demande: 27.10.2021
(73) Titulaire: Commissariat à l'Énergie Atomique et aux Énergies Alternatives, 75015 Paris (FR); Conservatoire National des Arts et Métiers, 75141 Paris Cedex 03 (FR); Centre National de la Recherche Scientifique (CNRS), 75016 Paris (FR)
(72) Inventeur: BERTHELOT, Thomas, 91940 Les Ulis (FR); GOULARD-HUET, Céline, 78320 Le Mesnil-Saint-Denis (FR); HAUQUIER, Fanny, 91260 Juvisy (FR)
(74) Mandataire: Icosa
(86) Numéro de dépôt international: PCT/FR2019/053185
(87) Numéro de publication internationale: WO 2020/128350

(56) Documents cités:
- WO-A1-97/47696
- WO-A1-2004/044040
- WO-A1-2018/069508
- WO-A1-2019/106459
- NZAMBE TA KEKI JEAN KERIM ET AL: "Synthesis and photobactericidal properties of a neutral porphyrin grafted onto lignocellulosic fibers", MATERIALS SCIENCE AND ENGINEERING C, vol. 62, 12 janvier 2016 (2016-01-12), pages 61-67, XP029452918, ISSN: 0928-4931, DOI: 10.1016/J.MSEC.2016.01.028

## Description

### DOMAINE DE L'INVENTION

La présente invention concerne le domaine des matériaux, de préférence des surfaces ayant des propriétés biocides, bactéricides et/ou bactériostatiques. En particulier, la présente demande concerne un procédé de préparation d'un matériau biocide, bactéricide et/ou bactériostatique capable de délivrer de l'oxygène singulet comme agent biocide, bactéricide et/ou comprenant une molécule présentant une activité bactériostatique.

### ÉTAT DE LA TECHNIQUE

Les supports cellulosiques tels que les textiles et tissus représentent un environnement propice à la croissance de micro-organismes (incluant les bactéries, les champignons et les virus).

Afin de pallier cette prolifération, des recherches ont été menées afin de conférer à ces supports, une activité antibactérienne durable et permanente dans le temps. Une des approches les plus efficaces consiste à incorporer des composés biocides à la surface et/ou au sein du support cellulosique.

Parmi les composés biocides, les photo-sensibilisateurs, en particulier de type porphyrine, ont la particularité en présence de lumière visible, de libérer de l'oxygène singulet, une espèce réactive qui endommage ou détruit les cellules et les microorganismes. De manière avantageuse, si l'oxygène singulet n'a pas réagi avec une cellule ou un microorganisme, il retourne à son état fondamental de manière inoffensive. L'incorporation de photo-sensibilisateurs au sein et/ou à la surface d'un support cellulosique offre la possibilité d'obtenir des surfaces ayant des propriétés photo-bactéricides à long terme et ne produisant pas de produit secondaire toxique pour son environnement. Cependant, cela nécessite de greffer chimiquement, via un lien covalent, le photo-sensibilisateur sur le support pour éviter tout phénomène de relargage du composé actif.

A ce jour, la préparation de matériaux photobactéricides comprenant des porphyrines comme agent bactéricide requiert des conditions sévères (haute température, utilisation de composés cancérigènes, mutagènes et/ou reprotoxiques). Par ailleurs, lorsque le support du matériau est composé de fibres, telles que des fibres cellulosiques ou des fibres synthétiques, le greffage de porphyrines nécessite de travailler sur des fibres isolées avant leur mise en forme, rendant le procédé complexe.

Des procédés alternatifs ont été développés pour préparer ces matériaux dans des conditions plus douces. Par exemple, BERTHELOT et al. (WO2018/069508) ont développé un procédé consistant à modifier une porphyrine de manière à introduire une fonction arylazide pouvant réagir avec la surface d'un support via une réaction d'insertion. L'irradiation UV du support modifié permet d'obtenir un matériau ayant des propriétés antibactériennes. Cependant, le procédé de BERTHELOT et al. nécessite des étapes de pré-fonctionnalisation du photo-sensibilisateur avant son greffage sur un support. Par ailleurs, le matériau ne présente pas d'activités biocides dans l'obscurité, ce qui limite les applications potentielles de ce matériau.

L'incorporation d'une activité bactériostatique et/ou biocide du matériau lorsque celui-ci est placé dans l'obscurité, implique de faire appel à d'autres stratégies de greffage sur le support que celles employées pour l'immobilisation de la porphyrine.

Aucun des procédés de l'art antérieur ne permet de modifier un support en une seule étape, afin de fournir un matériau ayant des propriétés biocides, bactéricides et/ou bactériostatiques, ces propriétés étant actives à la fois dans l'obscurité et en présence de lumière.

Ainsi, il existe toujours un besoin de fournir un procédé unique de préparation d'un matériau biocide, bactéricide et/ou bactériostatique actif à la fois dans l'obscurité et en présence de lumière ; la mise en œuvre du procédé devant être compatible avec les contraintes d'une industrialisation, notamment en favorisant une mise en œuvre en conditions plus douces, et avec un nombre réduit d'étapes, de préférence en une seule étape.

De manière surprenante, la Demanderesse a mis en évidence qu'un matériau avec de telles propriétés pouvait être obtenu à partir d'un procédé comprenant la préparation et/ou l'utilisation d'une solution précurseur comprenant :
a. au moins un monomère A ayant un groupe porphyrine et au moins une fonction polymérisable par voie radicalaire,
b. au moins un monomère B polymérisable par voie radicalaire,
c. un photo-amorceur, et
d. au moins l'un des monomères choisis parmi :
   i. un monomère C comprenant une amine quaternaire et une fonction polymérisable par voie radicalaire ; et/ou
   ii. un monomère D comprenant du cuivre et une fonction polymérisable par voie radicalaire.

### RÉSUMÉ

L'invention concerne donc un procédé de préparation d'un matériau biocide, bactéricide et/ou bactériostatique, ledit procédé comprenant :
a. la préparation d'une solution précurseur de polymère comprenant :
   i. au moins un monomère A ayant un groupe porphyrine et au moins une fonction polymérisable par voie radicalaire,
   ii. au moins un monomère B polymérisable par voie radicalaire,
   iii. un photo-amorceur,
   iv. au moins l'un des monomères choisis parmi :
      1. un monomère C comprenant une amine quaternaire et une fonction polymérisable par voie radicalaire ; et/ou
      2. un monomère D comprenant du cuivre et une fonction polymérisable par voie radicalaire ;
b. la mise en contact de la solution précurseur de polymère obtenue en (a) avec un support, résultant en l'imprégnation dudit support avec ladite solution précurseur de polymère ; et
c. la mise en œuvre par irradiation UV, de la polymérisation de la solution précurseur de polymère imprégnée dans le support selon l'étape (b), ladite irradiation UV étant réalisée à une longueur d'onde d'absorption inférieure à la longueur d'onde d'absorption maximale λmax du monomère A;
d. optionnellement, l'activation par irradiation lumineuse du monomère A.

Selon un mode de réalisation, le monomère A est une protoporphyrine, de préférence la diméthyl ester protoporphyrine ou le sel disodique de la protoporphyrine.

Selon un mode de réalisation, le monomère C est choisi parmi les (méth)acrylates comprenant une amine quaternaire ; de préférence est le chlorure de (2-(acryloyloxy)éthyl)triméthylammonium.

Selon un mode de réalisation, le monomère D est choisi parmi les (méth)acrylates comprenant du cuivre ou les di(méth)acrylates comprenant du cuivre ; de préférence l'acrylate de cuivre ou le diméthacrylate de cuivre.

Selon un mode de réalisation, le photo-amorceur a une longueur d'onde d'absorption maximale comprise de 350 nm à 400 nm ; de préférence de 360 à 380 nm ; plus préférentiellement environ 365 nm.

Selon un mode de réalisation, la solution précurseur de polymère comprend en outre un solvant, de préférence choisi parmi les solvants polaires, plus préférentiellement un mélange eau/éthanol ou le diméthylsulfoxide (DMSO).

La présente invention concerne également une solution précurseur d'un polymère biocide, bactéricide et/ou bactériostatique, ladite solution comprenant le mélange de :
a. au moins un monomère A ayant un groupe porphyrine et au moins une fonction polymérisable par voie radicalaire,
b. au moins un monomère B polymérisable par voie radicalaire,
c. un photo-amorceur,
d. au moins l'un des monomères choisis parmi :
   i. un monomère C comprenant une amine quaternaire et une fonction polymérisable par voie radicalaire ; et/ou
   ii. un monomère D comprenant du cuivre et une fonction polymérisable par voie radicalaire,
e. optionnellement, un solvant.

La présente invention concerne également un matériau biocide, bactéricide et/ou bactériostatique comprenant un support imprégné par une matrice polymère résultant de la polymérisation radicalaire d'une solution précurseur de polymère telle que décrite précédemment.

La présente invention concerne également l'utilisation de la solution précurseur de polymère telle que décrite précédemment ou du matériau biocide, bactéricide et/ou bactériostatique de l'invention, pour la préparation de vêtements de protection ou de revêtements de protection.

Selon un mode de réalisation, la solution précurseur de polymère de l'invention ou le matériau biocide, bactéricide et/ou bactériostatique de l'invention, est utile pour la stérilisation et/ou la décontamination d'une surface dans une utilisation non-thérapeutique.

### DÉFINITIONS

Dans la présente invention, les termes ci-dessous sont définis de la manière suivante :

**"Acrylate"** : désigne une fonction polymérisable par voie radicalaire de formule CH₂=CH(C=O)O⁻.

**"Bactéricide"** : se réfère à tout composé ou matériel destiné à tuer des bactéries.

**"Bactériostatique"** : se réfère à tout composé ou matériel capable d'inhiber la multiplication et/ou la production des bactéries sans les tuer.

**"Biocide"** : se réfère à tout composé ou matériel utilisé pour tuer, détruire, détériorer, rendre inoffensif, empêcher l'action ou combattre des organismes ; de préférence des organismes unicellulaires incluant par exemple des cellules eucaryotes ou procaryotes. Dans un mode de réalisation préféré, les organismes sont choisis parmi les bactéries, les champignons, les virus et/ou les levures.

"De X à **Y"** : se réfère à la gamme de valeurs comprises entre X et Y, les bornes X et Y étant inclues dans ladite gamme.

**"De plus de X à Y"** : se réfère à la gamme de valeurs comprises entre X et Y, la borne X étant exclue et la borne Y étant inclue dans ladite gamme.

**"Environ"** : placé devant un chiffre ou un nombre signifie plus ou moins 10% de la valeur de ce chiffre ou de ce nombre.

**"Fonction polymérisable par voie radicalaire"** : concerne toute fonction chimique organique capable d'être impliquée dans une réaction de polymérisation par voie radicalaire, c'est-à-dire apte à fournir après activation, au moins une espèce radicalaire active capable de réagir avec la fonction polymérisable par voie radicalaire d'une autre unité monomère de sorte à former une liaison simple, de préférence de type carbone-carbone ou carbone-oxygène. Selon un mode de réalisation, la fonction polymérisable par voie radicalaire est choisie parmi les fonctions acrylates, méthacrylates, styréniques, vinyliques, et acrylamides.

**"Irradiation UV"** : concerne toute action de lumière ayant une longueur d'onde comprise dans le domaine des ultra-violets sur un composé chimique ou un matériau.

**"Longueur d'onde"** : représente la périodicité spatiale des oscillations d'une onde électromagnétique, c'est-à-dire la distance entre deux oscillations maximales d'une onde électromagnétique. La longueur d'onde s'exprime en mètre (m). Selon la présente invention, l'expression « **longueur d'onde d'absorption** » désigne la longueur d'onde de la lumière après que celle-ci ait traversé un composé ou un matériau. Selon la présente invention, l'expression « **longueur d'onde d'absorption maximale** » notée λmax, désigne la longueur d'onde pour laquelle l'absorbance est maximale.

**"Méthacrylate"** : désigne une fonction polymérisable par voie radicalaire de formule CH₂=CCH₃(C=O)O⁻.

**"Monomère"** : concerne, au sens de la présente invention, tout composé organique ayant au moins une fonction polymérisable par voie radicalaire, c'est-à-dire qui est susceptible d'être engagée dans une réaction de polymérisation radicalaire. Selon un mode de réalisation, le terme « **monomère** » désigne tout composé chimique organique comprenant une ou plusieurs fonctions choisies parmi les acrylates, méthacrylates, styréniques, vinyliques, et acrylamides, de préférence choisies parmi les acrylates et les méthacrylates. Selon un mode de réalisation, le terme « **monomère** » inclut les chaînes macromoléculaires, de préférence obtenues par polymérisation, comprenant au moins une fonction polymérisable par voie radicalaire.

**"Photo-amorceur"** : concerne tout composé capable, sous l'action de la lumière, d'amorcer une polymérisation radicalaire.

**"Polymère"** : concerne un matériau comprenant ou étant constitué d'une ou plusieurs chaînes macromoléculaires. Selon un mode de réalisation, le terme « polymère » désigne, dans la présente invention, le produit d'une polymérisation radicalaire. Selon un mode de réalisation, le terme « polymère » désigne dans la présente invention le produit d'une polymérisation mise en œuvre à partir de monomères tels que définis précédemment, c'est-à-dire à partir de composés organiques ayant au moins une fonction polymérisable par voie radicalaire incluant par exemple, les acrylates, méthacrylates, styréniques, vinyliques et acrylamides.

**"Polymérisation"** : concerne toute réaction organique conduisant à la formation d'une ou plusieurs chaînes macromoléculaires, chacune comprenant la répétition d'une unité chimique. Selon un mode de réalisation, le terme « polymérisation » désigne une réaction de polymérisation radicalaire caractérisée par une étape d'amorçage, une étape de propagation et une étape de terminaison, bien connues par l'homme du métier. Selon un mode de réalisation, le terme « polymérisation » désigne une réaction de polymérisation radicalaire à partir de monomères tels que définis précédemment.

**"Porphyrine"** : désigne tout composé comprenant un macrocycle hétérocyclique constitué de quatre sous-unités pyrroles jointes sur leurs carbones alpha par quatre ponts méthine. Selon un mode de réalisation, le terme « porphyrine » inclut également les dérivés de porphyrine, c'est-à-dire les porphyrines substituées par une ou plusieurs fonctions chimiques, par exemple par des alkyles linéaires ou ramifiées, des alcènes, des alcynes, des hétéroalkyles, des acides carboxyliques, des esters, des cétones, des aldéhydes, des hydroxyles, des amines et des fonctions polymérisables par voie radicalaire telles que définies précédemment. Selon un mode de réalisation, le terme « porphyrine » inclut les protoporphyrines, leurs dérivés incluant les protoporphyrines substituées par une ou plusieurs fonctions chimiques, et leurs sels tels que par exemple, le sel disodique de la protoporphyrine. Selon un mode de réalisation, le terme « porphyrine » inclut la diméthyl ester protoporphyrine.

**"Solution précurseur de polymère"** : concerne tout mélange liquide conduisant après polymérisation, à l'obtention d'un polymère tel que défini précédemment.

**"Solvant polaire"** : concerne tout solvant ayant un moment dipolaire non nul.

### DESCRIPTION DÉTAILLÉE

### Procédé

La présente invention concerne un procédé de préparation d'un matériau, de préférence d'un matériau ayant des propriétés biocides, bactéricides et/ou bactériostatiques. Selon un mode de réalisation, le matériau de l'invention a une activité bactéricide et biocide contre les spores bactériennes et/ou une activité bactériostatique. Selon un mode de réalisation, le matériau de l'invention génère de l'oxygène singulet comme agent bactéricide.

Selon un mode de réalisation, le matériau comprend ou consiste en un support et un revêtement.

Selon un mode de réalisation, le procédé de l'invention est un procédé de polymérisation et/ou de greffage sur un support, d'un revêtement comprenant ou consistant en un polymère. Selon un mode de réalisation, le procédé de l'invention est un procédé de polymérisation et/ou d'imprégnation sur un support, d'un revêtement comprenant ou consistant en un polymère. Selon un mode de réalisation, le revêtement a une activité biocide contre les spores bactériennes et/ou une activité bactériostatique. Selon un mode de réalisation, le revêtement génère de l'oxygène singulet comme agent bactéricide.

### Etape (a)

Selon un mode de réalisation, le procédé de l'invention comprend au moins une étape de préparation d'une solution précurseur de polymère (appelée également « encre ») (étape notée (a)).

Selon un mode de réalisation, la solution précurseur de polymère comprend ou consiste au mélange d'au moins un monomère, de préférence au moins un monomère A ayant un groupe porphyrine et au moins une fonction polymérisable par voie radicalaire, avec un photo-amorceur. Selon un mode de réalisation, la solution précurseur de polymère comprend ou consiste au mélange d'au moins un monomère A ayant un groupe porphyrine et au moins une fonction polymérisable par voie radicalaire, au moins un monomère B polymérisable par voie radicalaire, et un photo-amorceur.

Selon un mode de réalisation, le monomère A est une porphyrine ou l'un de ses dérivés. Selon la présente invention, on entend par « **dérivé de porphyrine** », toute porphyrine substituée, de préférence toute porphyrine substituée sur au moins un de ses cycles pyrroles et/ou sur au moins un de ses ponts méthine. Selon un mode de réalisation, le monomère A est une porphyrine substituée par au moins un groupe choisi parmi alkyle, hétéroalkyle, alcène, aryle, hétéroaryle, cycloalkyle et toute fonction polymérisable par voie radicalaire telle que par exemple, acrylate, méthacrylate, vinylique, ou acrylamide ; ledit groupe pouvant être substitué par au moins un substituent choisi parmi alkyle, hétéroalkyle, alcène, aryle, hétéroaryle, cycloalkyle, acide carboxylique, hydroxyle, amine et cétone. Selon un mode de réalisation, le monomère A est une porphyrine substituée par au moins un groupe choisi parmi alkyle, hétéroalkyle, alcène, aryle, hétéroaryle, cycloalkyle et toute fonction polymérisable par voie radicalaire telle que par exemple, acrylate, méthacrylate, styrénique, vinylique, ou acrylamide ; ledit groupe pouvant être substitué par au moins un substituent choisi parmi alkyle, hétéroalkyle, alcène, aryle, hétéroaryle, cycloalkyle, acide carboxylique, hydroxyle, amine et cétone.

Selon un mode de réalisation, le monomère A est une porphyrine substituée par au moins un groupe alkyle, un groupe alcène et un groupe alkyle substitué par une fonction carboxylique.

Selon un mode de réalisation, le monomère A est une protoporphyrine ou l'un de ses sels et/ou dérivés, de préférence une protoporphyrine IX, plus préférentiellement le monomère A est la diméthyl ester protoporphyrine. Dans la présente invention, on entend par « **sel de protoporphyrine** » toute protoporphyrine pour laquelle l'un au moins des protons des fonctions carboxyliques de la protoporphyrine a été remplacé par un cation alcalin tel que par exemple par un ion lithium, (Li+), sodium (Na+), potassium (K+), rubidium (Rb+), Césium (Cs+) ou Francium (Fr+). Selon un mode de réalisation, le monomère A est un sel de protoporphyrine, de préférence le sel de disodium protoporphyrine.

Selon un mode de réalisation, le monomère B est choisi parmi tout composé organique (incluant les composés de masses molaires faibles et les composés de masses molaires élevées tels que des chaînes macromoléculaires) ayant au moins une fonction polymérisable par voie radicalaire, de préférence tout composé organique ayant au moins une fonction choisie parmi les acrylates, méthacrylates, styréniques, vinyliques et acrylamides, de préférence choisie parmi les acrylates et les méthacrylates, plus préférentiellement ledit monomère B est le 2-(diméthylamino)éthylacrylate. Selon un mode de réalisation, le monomère B est une chaîne macromoléculaire ayant au moins une fonction polymérisable par voie radicalaire ; de préférence le monomère B est une chaîne macromoléculaire obtenue par toute technique de polymérisation connue par l'homme du métier, et comprenant au moins une fonction polymérisable par voie radicalaire ; plus préférentiellement, ledit monomère B est une chaîne de poly(éthylène glycol) comprenant au moins une fonction acrylate ou méthacrylate, plus préférentiellement ledit monomère B est le poly(éthylène glycol) diacrylate (PEGDA).

Dans la présente invention, le photo-amorceur est choisi parmi ceux connus de l'homme de l'art. Selon un mode de réalisation, le photo-amorceur est un photo-amorceur radicalaire, de préférence choisi parmi les oxydes de phosphine, l'acétophénone et ses dérivés, les éthers de benzoïne, la benzophénone et ses dérivés, le thioxanthone et ses dérivés, le benzyle et ses dérivés, plus préférentiellement le photo-amorceur est l'oxyde de diphényl(2,4,6-triméthylbenzoyl)phosphine.

Selon un mode de réalisation, le photo-amorceur a une longueur d'onde d'absorption maximale inférieure à la longueur d'onde d'absorption maximale du monomère A, de préférence ledit photo-amorceur a une longueur d'onde d'absorption comprise de 350 nm à 400 nm ; de préférence de 360 à 380 nm ; plus préférentiellement environ 365 nm.

Selon un mode de réalisation, la solution précurseur de polymère comprend en outre au moins un composé ayant une activité biocide, bactéricide et/ou bactériostatique, partielle ou totale, à l'obscurité.

Selon un mode de réalisation, le composé ayant une activité biocide, bactéricide et/ou bactériostatique, partielle ou totale, à l'obscurité est l'un des monomères choisis parmi :
a. un monomère C comprenant une amine quaternaire et une fonction polymérisable par voie radicalaire telle que définie précédemment ; et/ou
b. un monomère D comprenant du cuivre et une fonction polymérisable par voie radicalaire telle que définie précédemment.

Selon un mode de réalisation, le monomère C est choisi parmi les (méth)acrylates comprenant une amine quaternaire, de préférence est choisi parmi les (acryloyloxyalkyl)alkylammmonium, plus préférentiellement est le (2-(acryloyloxy)éthyl)triméthylammonium. Selon un mode de réalisation, le monomère C comprend un contre-ion halogéné, de préférence un contre-ion chlorure.

Selon un mode de réalisation, le monomère D est choisi parmi les (méth)acrylates comprenant du cuivre, de préférence est un acrylate de cuivre ou un diméthacrylate comprenant du cuivre, plus préférentiellement est le diméthacrylate de cuivre (c'est-à-dire un complexe formé par un ion cuivre (Cu²⁺) complexé à deux molécules méthacrylate).

Selon un mode de réalisation, la solution précurseur de polymère consiste ou comprend :
a. au moins un monomère A ayant un groupe porphyrine et au moins une fonction polymérisable par voie radicalaire,
b. au moins un monomère B polymérisable par voie radicalaire,
c. un photo-amorceur,
d. au moins l'un des monomères choisis parmi :
   i. un monomère C comprenant une amine quaternaire et une fonction polymérisable par voie radicalaire ; et/ou
   ii. un monomère D comprenant du cuivre et une fonction polymérisable par voie radicalaire.

Selon un mode de réalisation, la solution précurseur de polymère comprend le monomère A dans une gamme de plus de 0% à 10%, de préférence de plus de 0% à 9%, de plus de 0% à 8%, de plus de 0% à 7%, de plus de 0% à 6%, de plus de 0% à 5%, de plus de 0% à 4%, de plus de 0% à 3%, de plus de 0% à 2%, ou de plus de 0% à 1%,en poids par rapport au poids total de la solution précurseur de polymère. Selon un mode de réalisation, la solution précurseur de polymère comprend environ 1%, 2%, 3%, 4%, 5%, 6%, 7%, 8%, 9% ou 10% de monomère A, les pourcentages étant exprimés en poids par rapport au poids total de la solution précurseur de polymère. Selon un mode de réalisation, la solution précurseur de polymère comprend environ 0,1%, 0,2%, 0,3%, 0,4%, 0,5%, 0,6%, 0,7%, 0,8%, 0,9% ou 1% de monomère A, les pourcentages étant exprimés en poids par rapport au poids total de la solution précurseur de polymère. Selon un mode de réalisation, lorsque la solution précurseur de polymère comprend un solvant, le monomère A représente une quantité massique de plus de 0% à 10%, de préférence de plus de 0% à 1%, en poids par rapport au poids total de la solution précurseur de polymère. Selon un mode de réalisation, lorsque la solution précurseur de polymère comprend un solvant, le monomère A représente une quantité massique environ égale à 0,1% en poids par rapport au poids total de la solution précurseur de polymère. Selon un mode de réalisation, lorsque la solution précurseur de polymère ne comprend pas de solvant, le monomère A représente une quantité massique de plus de 0% à 10%, de préférence de plus de 0% à 1%, en poids par rapport au poids total de la solution précurseur de polymère. Selon un mode de réalisation, lorsque la solution précurseur de polymère ne comprend pas de solvant, le monomère A représente une quantité massique environ égale à 0,3% en poids par rapport au poids total de la solution précurseur de polymère.

Selon un mode de réalisation, la solution précurseur de polymère comprend le monomère B dans une gamme de plus de 0% à 50%, de préférence de 1% à 40%, de 1% à 30%, de 1% à 20%, ou de 1% à 10% en poids par rapport au poids total de la solution précurseur de polymère. Selon un mode de réalisation, la solution précurseur de polymère comprend environ 1%, 2%, 3%, 4% , 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49% ou 50% de monomère B, les pourcentages étant exprimés en poids par rapport au poids total de la solution précurseur de polymère. Selon un mode de réalisation, lorsque la solution précurseur de polymère ne comprend pas de solvant, le monomère B représente une quantité massique de plus de 0% à 50%, en poids par rapport au poids total de la solution précurseur de polymère. Selon un mode de réalisation, lorsque la solution précurseur de polymère comprend un solvant, le monomère B représente une quantité massique de plus de 0% à 30%, en poids par rapport au poids total de la solution précurseur de polymère. Selon un mode de réalisation, lorsque la solution précurseur de polymère ne comprend pas de solvant, le monomère B représente une quantité massique environ égale à 23% ou 41% en poids par rapport au poids total de la solution précurseur de polymère. Selon un mode de réalisation, lorsque la solution précurseur de polymère comprend un solvant, le monomère B représente une quantité massique environ égale à 10% ou 20% en poids par rapport au poids total de la solution précurseur de polymère.

Selon un mode de réalisation, la solution précurseur de polymère comprend le photo-amorceur dans une gamme de plus de 0% à 30%, de préférence de 1% à 25%, de 1% à 20%, de 1% à 15%, de 1% à 10%, ou de 1% à 5% en poids par rapport au poids total de la solution précurseur de polymère. Selon un mode de réalisation, la solution précurseur de polymère comprend le photo-amorceur dans une quantité massique environ égale à 1%, 2%, 3%, 4%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29% ou 30% en poids par rapport au poids total de la solution précurseur de polymère. Selon un mode de réalisation, lorsque la solution précurseur de polymère ne comprend pas de solvant, le photo-amorceur représente une quantité massique de plus de 0% à 30%, de préférence de 1% à 20%, en poids par rapport au poids total de la solution précurseur de polymère. Selon un mode de réalisation, lorsque la solution précurseur de polymère ne comprend pas de solvant, le photo-amorceur représente une quantité massique environ égale à 13% ou 17% en poids par rapport au poids total de la solution précurseur de polymère.

Selon un mode de réalisation, lorsque la solution précurseur de polymère comprend un solvant, le photo-amorceur représente une quantité massique de plus de 0% à 20%, de préférence de 1% à 10%, en poids par rapport au poids total de la solution précurseur de polymère. Selon un mode de réalisation, lorsque la solution précurseur de polymère comprend un solvant, le photo-amorceur représente une quantité massique environ égale à 6% ou 7% en poids par rapport au poids total de la solution précurseur de polymère.

Selon un mode de réalisation, lorsque la solution précurseur de polymère comprend à la fois le monomère C et à la fois le monomère D, le ratio massique du monomère C sur le monomère D varie de plus de 0 à 10, de préférence de 1 à 6, plus préférentiellement ledit ratio massique est environ égal à 4 ou 5. Selon un mode de réalisation, lorsque la solution précurseur de polymère comprend à la fois le monomère C et le monomère D, le ratio massique du monomère C sur le monomère D est environ égal à 1, 2, 3, 4, 5, 6, 7, 8, 9 ou 10.

Selon un mode de réalisation, la solution précurseur de polymère comprend le monomère C dans une gamme de plus de 0% à 60%, de préférence de 1% à 50%, de 1% à 40%, de 1% à 30%, de 1% à 20%, ou de 1% à 10%, les pourcentages étant exprimés en poids par rapport au poids total de la solution précurseur de polymère. Selon un mode de réalisation, la solution précurseur de polymère comprend environ 1%, 2%, 3%, 4% , 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, 50%, 51%, 52%, 53%, 54%, 55%, 56%, 57%, 58%, 59% ou 60% de monomère C, en poids par rapport au poids total de la solution précurseur de polymère. Selon un mode de réalisation, lorsque la solution précurseur de polymère ne comprend pas de solvant, le monomère C représente une quantité massique de plus de 0% à 50%, en poids par rapport au poids total de la solution précurseur de polymère. Selon un mode de réalisation, lorsque la solution précurseur de polymère ne comprend pas de solvant, le monomère C représente une quantité massique environ égale à 30%, 38%, 40% ou 50% en poids par rapport au poids total de la solution précurseur de polymère. Selon un mode de réalisation, lorsque la solution précurseur de polymère comprend un solvant, le monomère C représente une quantité massique de plus de 0% à 30%, en poids par rapport au poids total de la solution précurseur de polymère. Selon un mode de réalisation, lorsque la solution précurseur de polymère comprend un solvant, le monomère C représente une quantité massique environ égale à 15%, 17%, 19% ou 21 % en poids par rapport au poids total de la solution précurseur de polymère.

Selon un mode de réalisation, la solution précurseur de polymère comprend le monomère D dans une gamme de plus de 0% à 20%, de préférence de 1% à 15%, de 1% à 10%, ou de 1% à 5% en poids par rapport au poids total de la solution précurseur de polymère. Selon un mode de réalisation, la solution précurseur de polymère comprend environ 1%, 2%, 3%, 4%, 5%, 6%, 7%, 8%, 9%, 10%, 11%, 12%, 13%, 14%, 15%, 16%, 17%, 18%, 19%, ou 20%, de monomère D en poids par rapport au poids total de la solution précurseur de polymère. Selon un mode de réalisation, lorsque la solution précurseur de polymère ne comprend pas de solvant, le monomère D représente une quantité massique de plus de 0% à 20%, de préférence de 1% à 15%, plus préférentielle de 5% à 12% en poids par rapport au poids total de la solution précurseur de polymère. Selon un mode de réalisation, lorsque la solution précurseur de polymère ne comprend pas de solvant, le monomère D représente une quantité massique environ égale à 8% ou 10% en poids par rapport au poids total de la solution précurseur de polymère. Selon un mode de réalisation, lorsque la solution précurseur de polymère comprend un solvant, le monomère D représente une quantité massique de plus de 0% à 10%, de préférence de 1% à 8%, en poids par rapport au poids total de la solution précurseur de polymère. Selon un mode de réalisation, lorsque la solution précurseur de polymère comprend un solvant, le monomère D représente une quantité massique environ égale à 4% en poids par rapport au poids total de la solution précurseur de polymère.

Selon un mode de réalisation, la solution précurseur de polymère consiste ou comprend :
- diméthyl ester protoporphyrine,
- polyéthylène glycol diacrylate (PEGDA),
- une solution de chlorure de 2-(acryloyloxy)éthyl)triméthylammonium, de préférence à 80% en poids dans l'eau,
- du diméthacrylate de cuivre,
- un solvant polaire, de préférence du diméthylsulfoxyde (DMSO), et
- oxyde de diphényl(2,4,6-triméthylbenzoyl)phosphine.

Selon un mode de réalisation, la solution précurseur de polymère consiste ou comprend :
- sel disodique de la protoporphyrine ,
- polyéthylène glycol diacrylate (PEGDA),
- une solution de chlorure de (2-(acryloyloxy)éthyl)triméthylammonium, de préférence à 80% en poids dans l'eau,

- du diméthacrylate de cuivre,
- un solvant polaire, de préférence du diméthylsulfoxyde (DMSO), et
- oxyde de diphényl(2,4,6-triméthylbenzoyl)phosphine.

Selon un mode de réalisation, la solution précurseur de polymère consiste ou comprend :
- sel disodique de la protoporphyrine,
- polyéthylène glycol diacrylate (PEGDA),
- chlorure de (2-(acryloyloxy)éthyl)triméthyl-ammonium,
- de l'acrylate de cuivre,
- un solvant polaire, de préférence un mélange eau / éthanol, et
- l'oxyde de diphényl(2,4,6-triméthylbenzoyl)phosphine.

Selon un mode de réalisation, la solution précurseur de polymère consiste ou comprend :
- sel disodique de la protoporphyrine ,
- polyéthylène glycol diacrylate (PEGDA),
- du diméthacrylate de cuivre,
- 2-(diméthylamino)éthyl acrylate,
- un solvant polaire, de préférence du diméthylsulfoxyde (DMSO), et
- oxyde de diphényl(2,4,6-triméthylbenzoyl)phosphine.

Selon un mode de réalisation, la solution précurseur de polymère consiste ou comprend :
- 10 mg de diméthyl ester protoporphyrine ou de sel de disodium protoporphyrine,
- 0,7 g de polyéthylène glycol diacrylate (PEGDA),
- 1,5 g d'une solution de chlorure de (2-(acryloyloxy)éthyl)triméthylammonium, de préférence à 80% en poids dans l'eau,
- 0,3 g de diméthacrylate de cuivre,
- 4 g d'un solvant polaire, de préférence du diméthylsulfoxyde (DMSO), et
- 500 mg d'oxyde de diphényl(2,4,6-triméthylbenzoyl)phosphine.

Selon un mode de réalisation, la solution précurseur de polymère consiste ou comprend :
- 10 mg de diméthyl ester protoporphyrine ou de sel de disodium protoporphyrine,
- 0,7 g de polyéthylène glycol diacrylate (PEGDA),
- 0,9 g de 2-(diméthylamino)éthyl acrylate,
- 0,3 g de diméthacrylate de cuivre,
- 4 g d'un solvant polaire, de préférence du diméthylsulfoxyde (DMSO), et
- 500 mg d'oxyde de diphényl(2,4,6-triméthylbenzoyl)phosphine.

### Etape (b)

Selon un mode de réalisation, le procédé de l'invention comprend une étape de mise en contact de la solution précurseur de polymère obtenue en (a) avec un support, résultant en l'imprégnation dudit support avec ladite solution précurseur de polymère (étape notée (b)).

Selon un mode de réalisation, l'étape (b) est mise en œuvre à une température comprise de plus de 0°C à 50°C, de préférence de 5°C à 30°C, plus préférentiellement à une température environ égale à 20°C.

Selon un mode de réalisation, l'étape (b) est mise en œuvre à pression atmosphérique.

Selon un mode de réalisation, le support peut être tout support connu par l'homme du métier incluant les supports naturels ou synthétiques. Selon un mode de réalisation, le support peut être dur ou flexible. Selon un mode de réalisation, le support est apte à réagir avec au moins une fonction polymérisable par voie radicalaire d'un monomère tel que défini précédemment. Selon un mode de réalisation, le support comprend ou consiste en un composé cellulosique tel que par exemple, du coton ou du papier.

Selon un mode de réalisation, le support comprend ou est constitué d'au moins un polymère synthétique ou naturel. Selon un mode de réalisation, le support est en polymère ou comprend un polymère, de préférence choisi parmi les polystyrènes, polyacrylates, polyméthacrylates, polyoléfines (tels que polyéthylène, polypropylène, polybutadiène), polyuréthanes, polyacrylamides, polyacrylonitriles, polyamides, polyesters, polyéthers, polycarbonates, polyimides, polycétones, polysiloxanes, polyépoxydes, et leurs copolymères et/ou leurs mélanges.

Selon un mode de réalisation, le polymère naturel est choisi parmi la cellulose et le caoutchouc (i.e. le poly(isoprène)).

Selon un mode de réalisation, la solution précurseur de polymère telle que définie précédemment est appliquée sur le support par toute technique connue de l'homme du métier incluant spray (ou vaporisation), trempage, ensimage, impression jet d'encre telle que « dip coating » ou « drop coating » (revêtement par dépôt de goutte à goutte à la surface du support).

Selon un mode de réalisation, l'étape (b) comprend en outre une étape de séchage. Selon un mode de réalisation, l'étape (b) comprend en outre une étape de lavage. Selon un mode de réalisation, l'étape (b) comprend en outre une étape d'évaporation du solvant.

Selon un mode de réalisation, l'étape (b) est mise en œuvre dans un environnement sombre, c'est-à-dire dans un environnement à l'abri de la lumière.

### Etape (c)

Selon un mode de réalisation, le procédé de l'invention comprend en outre une étape d'irradiation du support imprégné par la solution précurseur de polymère, obtenu à l'étape (b). Selon un mode de réalisation, l'irradiation à l'étape (c) est une irradiation par rayonnement ultraviolet (UV). Selon un mode de réalisation, l'irradiation, de préférence UV, est réalisée à une longueur d'onde d'absorption inférieure à la longueur d'onde d'absorption maximale λmax du monomère A tel que décrit précédemment.

Selon un mode de réalisation, l'irradiation de l'étape (c) est mise en œuvre par une lampe UV connue par l'homme du métier, de préférence par une lampe UV émettant à une longueur d'onde d'environ 365 nm.

Selon un mode de réalisation, la durée d'irradiation de l'étape (c) est comprise de plus de 0 secondes à 24 heures, de préférence de 1s à 12h, plus préférentiellement de 1s à 3600s. Selon un mode de réalisation, la durée d'irradiation de l'étape (c) est comprise de plus de 0s à 24h, de préférence de 1s à 12h, plus préférentiellement de 1s à 3600s. Selon un mode de réalisation, la durée d'irradiation de l'étape (c) est comprise de 1s à 60s, de préférence de 1s à 50s, de 1s à 40s, de 1s à 30s, de 1s à 20s ou de 1s à 10s.

Selon un mode de réalisation, la longueur d'onde de l'irradiation de l'étape (c) est comprise de 10 nm à 380 nm, de préférence de 120 nm à 370 nm, plus préférentiellement de 200 nm à 380 nm. Selon un mode de réalisation, la longueur d'onde de l'irradiation de l'étape (c) est environ égale à 365 nm. Selon un mode de réalisation, la longueur d'onde de l'irradiation de l'étape (c) est comprise de 10 nm à 380 nm, de préférence de 120 nm à 370 nm, plus préférentiellement de 200 nm à 370 nm.

Selon un mode de réalisation, la longueur d'onde d'absorption est inférieure à la longueur d'onde d'absorption maximale λₘₐₓ du monomère A tel que défini précédemment, de préférence est inférieure à 400 nm, plus préférentiellement est inférieure à 390 nm, 380nm, ou 370 nm.

### Etape (d)

Selon un mode de réalisation, le procédé de l'invention comprend en outre une étape d'activation du monomère A. Selon un mode de réalisation, l'activation du monomère A est mise en œuvre par l'irradiation du monomère A, de préférence le monomère A ayant été incorporé dans le polymère imprégnant le support modifié après la mise en œuvre des étapes (a) à (c) du procédé de l'invention.

Selon un mode de réalisation, l'activation du monomère A est mise en œuvre par irradiation lumineuse, de préférence à une longueur d'onde comprise dans le domaine visible, plus préférentiellement à la longueur d'onde d'absorption maximale λₘₐₓ de la porphyrine, plus préférentiellement à environ 400 nm.

Selon un mode de réalisation, l'activation du monomère A est mise en œuvre pendant une durée de 30s à 24h, de préférence de 1mn à 12h, de préférence de 2mn à 6h. Selon un mode de réalisation, l'activation du monomère A est mise en œuvre pendant une durée d'environ 1h, 2h, 3h, 4h, 5h, 6h, 7h, 8h, 9h, 10h, 11h, 12h, 13h, 14h, 15h, 16h, 17h, 18h, 19h, 20h, 21h, 22h, 23h ou 24h. Selon un mode de réalisation, l'activation du monomère A est mise en œuvre pendant une durée d'environ 1mn, 2mn, 3mn, 4mn, 5mn, 6mn, 7mn, 8mn, 9mn, 10mn, 11mn, 12mn, 13mn, 14mn, 15mn, 16mn, 17mn, 18mn, 19mn, 20mn, 21mn, 22mn, 23mn, 24mn, 25mn, 26mn, 27mn, 28mn, 29mn, 30mn, 31mn, 32mn, 33mn, 34mn, 35mn, 36mn, 37mn, 38mn, 39mn, 40mn, 41mn, 42mn, 43mn, 44mn, 45mn, 46mn, 47mn, 48mn, 49mn, 50mn, 51mn, 52mn, 53mn, 54mn, 55mn, 56mn, 57mn, 58mn, 59mn ou 60min. Selon un mode de réalisation, l'activation du monomère A est mise en œuvre pendant une durée de 1s à 60s, de préférence de 20s à 40s, plus préférentiellement d'environ 30s.

### Solution précurseur

La présente invention concerne également une solution précurseur d'un polymère biocide, bactéricide et/ou bactériostatique, ladite solution étant définie telle que décrite précédemment.

### Matériau

La présente invention concerne également un matériau biocide, bactéricide et/ou bactériostatique. Selon un mode de réalisation, le matériau de l'invention est susceptible d'être obtenu par le procédé de l'invention, tel que décrit précédemment.

Selon un mode de réalisation, le matériau de l'invention comprend ou consiste en un support et un revêtement polymère, de préférence ledit revêtement polymère ayant été obtenu à partir d'une solution précurseur de polymère telle que décrite précédemment.

Selon un mode de réalisation, le support peut être tout support connu par l'homme du métier incluant les supports naturels ou synthétiques. Selon un mode de réalisation, le support peut être dur ou flexible. Selon un mode de réalisation, le support est apte à réagir avec au moins une fonction polymérisable par voie radicalaire d'un monomère tel que défini précédemment. Selon un mode de réalisation, le support comprend ou consiste en un composé cellulosique tel que par exemple, du coton ou du papier.

Selon un mode de réalisation, le support est en polymère ou comprend un polymère, de préférence choisi parmi polystyrènes, polyacrylates, polyméthacrylates, polyoléfines (tels que polyéthylène, polypropylène, polybutadiène), polyuréthanes, polyacrylamides, polyacrylonitriles, polyamides, polyesters, polyethers, polycarbonates, polyimides, polycétones, polysiloxanes, polyépoxydes, et leurs copolymères et/ou leurs mélanges.

Selon un mode de réalisation, le revêtement est organique, de préférence comprend ou est constitué d'un polymère organique, plus préférentiellement d'un polymère obtenu par polymérisation radicalaire, plus préférentiellement par polymérisation radicalaire à partir de la solution précurseur de polymère telle que décrite précédemment.

Selon un mode de réalisation, le revêtement comprend ou consiste en une ou plusieurs chaînes macromoléculaires, de préférence des chaînes macromoléculaires organiques, plus préférentiellement des chaînes macromoléculaires organiques comprenant une ou plusieurs fonctions ammonium quaternaire et/ou plusieurs ions cuivre de degré d'oxydation +II.

Selon un mode de réalisation, le matériau ou le revêtement de l'invention a une activité biocide, bactéricide et/ou bactériostatique à l'encontre de bactéries de type Gram positif (Gram +) et/ou Gram négatif (Gram -), de préférence à l'encontre de *Escherichia coli* (Gram -), *Bacillus thuringiensis* (Gram +) sous forme végétative (forme bactérienne), *Yersinia pestis* (Gram -) et/ou *Bacillus anthracis* (Gram +) végétative, ainsi que la forme sporulée de *B.thuringiensis.* En effet, certaines espèces bactériennes comme *B. thuringiensis* sont capables de sporuler. Dans la présente invention, on entend par « **spores bactériennes** », une forme microbienne multicouche extrêmement résistante aux perturbations environnementales (stress nutritif, dessiccation, chaleur, radiations, antibiotiques, antiseptiques et désinfectants standards, etc...). Cette résistance est notamment liée à leur structure unique qui est particulièrement compacte et peu perméable.

### Utilisations

L'invention concerne également l'utilisation de la solution précurseur de polymère, du matériau ou du procédé de l'invention, tels que décrits précédemment.

Selon un mode de réalisation, la solution précurseur de polymère, le matériau ou le procédé de l'invention sont utiles dans le domaine des textiles ou des revêtements de protection, ou dans le domaine sanitaire.

Selon un mode de réalisation, la solution précurseur de polymère, le matériau ou le procédé de l'invention sont utiles pour la préparation de vêtements de protection ou de revêtements de protection.

Selon un mode de réalisation, la solution précurseur de polymère de l'invention ou le matériau biocide, bactéricide et/ou bactériostatique de l'invention, est utile pour la stérilisation et/ou la décontamination d'une surface dans une utilisation non-thérapeutique.

### Kit

L'invention concerne également un kit pour la mise en œuvre du procédé de l'invention.

Selon un mode de réalisation, le kit comprend au moins un compartiment comprenant la solution précurseur de polymère telle que décrite précédemment.

Selon un mode de réalisation, le kit comprend :
un premier compartiment dans lequel sont mélangés le monomère A, le monomère B, et au moins l'un des monomères C et D ; et
un second compartiment comprenant le photo-amorceur.

Selon un mode de réalisation, le kit comprend :
un premier compartiment dans lequel sont mélangés le monomère A, le monomère B, et au moins l'un des monomères C et/ou D ; et
un second compartiment comprenant le photo-amorceur.

Selon un mode de réalisation, le kit est opaque et ne laisse pas passer la lumière.

### EXEMPLES

La présente invention se comprendra mieux à la lecture des exemples suivants qui illustrent non-limitativement l'invention.

### Abréviations

cm : centimètre(s)
DMSO : diméthylsulfoxyde
g : gramme
kW : kilowatt(s)
mg : milligramme(s)
min : minute(s)
nm : nanomètre(s)
M_{w} : masse molaire moléculaire en poids (en g/mol)
PBS : tampon phosphate salin (« Phosphate Buffered Saline »)
PEGDA : polyéthylène glycol diacrylate
PTFE : polytétrafluroroéthylène
s : seconde(s)
UV : ultraviolets
W/cm² : watt par centimètre carré

### Matériel et Méthodes

### PARTIE 1 - CHIMIE

### Exemple 1 : Préparation des solutions précurseur de polymère

Dans le cadre de l'invention, diverses encres ont été préparées :
- une encre ne comprenant ni ammonium ni cuivre (encre A),
- trois encres comprenant une protoporphyrine, un ammonium et un composé comprenant du cuivre (encres B, C et F), et
- deux encres sans porphyrine : l'encre D comprenant du cuivre mais pas d'ammonium et l'encre E comprenant un ammonium mais pas de cuivre .

Ces encres ont été préparées en mélangeant les composés listés ci-dessous pour chaque encre. Puis, après agitation par ultrasons, toutes les encres ont été filtrées sur filtre PTFE (0,45 µm) et conservées à l'abri de la lumière.

**[Table 1] Les encres B, C et F illustrent des produits selon l'invention.**

| | |
|---|---|
| **Encre A** | Sel disodique de protoporphyrine IX (CAS N°: 50865-01-5) : 10 mg |
| | Polyéthylène glycol diacrylate de M_{w} environ égale à 750 g/mol (CAS N°: 26570-48-9) : 0,7 g |
| | 2-(Diméthylamino)éthyl acrylate (CAS N°: 2439-35-2) : 0,90 g |
| | Méthacrylate de méthyle (CAS N°: 80-62-6) : 0,25 g |
| | DMSO (CAS N°: 67-68-5) : 4g |
| | Oxyde de diphényl(2,4,6-triméthylbenzoyl)phosphine (CAS N°: 75980-60-8) : 500 mg |
| **Encre B** | Diméthyl ester protoporphyrine IX (CAS N°: 5522-66-7) : 10 mg |
| | Polyéthylène glycol diacrylate de M_{w} environ égale à 750 g/mol (CAS N°: 26570-48-9) : 0,7 g |
| | Solution de chlorure de (2-(acryloyloxy)éthyl)triméthyl-ammonium (80% en poids dans l'eau) (CAS N°: 44992-01-0) : 1,5 g |
| | Diméthacrylate de cuivre (Cu²⁺) (CAS N°: 19662-59-0) : 0,3 g DMSO (CAS N°: 67-68-5) : 4g |
| | Oxyde de diphényl(2,4,6-triméthylbenzoyl)phosphine (CAS N°: 75980-60-8) : 500 mg |
| **Encre C** | Sel disodique de protoporphyrine IX (CAS N° : 50865-01-5) : 10 mg |
| | Polyéthylène glycol diacrylate de M_{w} environ égale à 750 g/mol (CAS N° : 26570-48-9): 0,7 g |
| | Solution de chlorure de (2-(acryloyloxy)éthyl)triméthyl-ammonium (80% en poids dans l'eau) (CAS N°: 44992-01-0) : 1,5 g |
| | Diméthacrylate de cuivre (Cu²⁺) (CAS N° : 19662-59-0) : 0,3 g |
| | DMSO (CAS N° : 67-68-5) : 4g |
| | Oxyde de diphényl(2,4,6-triméthylbenzoyl)phosphine (CAS N°: 75980-60-8) : 500 mg |
| **Encre D** | Polyéthylène glycol diacrylate de M_{w} environ égale à 750 g/mol (CAS N° : 26570-48-9) : 0,7 g |
| | 2-(Diméthylamino)éthyl acrylate (CAS N°: 2439-35-2) : 0.90 g |
| | Diméthacrylate de cuivre (Cu²⁺) (CAS N° : 19662-59-0) : 0,3 g |
| | DMSO (CAS N° : 67-68-5) : 4g |
| | Oxyde de diphényl(2,4,6-triméthylbenzoyl)phosphine (CAS N°: 75980-60-8) : 500 mg |
| **Encre E** | Polyéthylène glycol diacrylate de M_{w} environ égale à 750 g/mol (CAS N° : 26570-48-9): 0,7 g |
| | Solution de chlorure de (2-(acryloyloxy)éthyl)triméthyl-ammonium (80% en poids dans l'eau) (CAS N°: 44992-01-0) : 1,5 g |
| | Méthacrylate de méthyle (CAS N° : 80-62-6) : 0,25 g |
| | DMSO (CAS N° : 67-68-5) : 4g |
| | Oxyde de diphényl(2,4,6-triméthylbenzoyl)phosphine (CAS N°: 75980-60-8) : 500 mg |
| **Encre F** | Sel disodique de protoporphyrine IX (CAS N°: 50865-01-5) : 10 mg |
| | Polyéthylène glycol diacrylate de M_{w} environ égale à 750 g/mol (CAS N°: 26570-48-9) : 0,7 g |
| | Solution de chlorure de (2-(acryloyloxy)éthyl)triméthyl-ammonium (80% en poids dans l'eau) (CAS N°: 44992-01-0) : 1,5 g |
| | Acrylate de cuivre (Cu²⁺) (CAS N°:20074-76-4) : 0,13 g |
| | Ethanol (CAS N°: 67-68-5) : 2g |
| | Eau : 2 g |
| | Oxyde de diphényl(2,4,6-triméthylbenzoyl)phosphine (CAS N°: 75980-60-8) : 250 mg |

### Exemple 2 : Procédé de préparation d'un matériau biocide, bactéricide et/ou bactériostatique

Le procédé de préparation d'un matériau biocide, bactéricide et/ou bactériostatique a été mise en œuvre en :
- préparant l'une des solutions précurseur de polymère (ou encre) telle que décrite dans l'exemple 1,
- puis en mettant en contact cette encre avec un support (disque de 1,2 cm de diamètre de coton). Dans les expériences réalisées par la Demanderesse, le support a été imprégné avec l'encre par l'une quelconque des techniques suivantes : spray, trempage, ensimage, impression jet d'encre, « dip coating » ou « drop coating » (revêtement par dépôt de goutte à goutte à la surface du support).

Les supports imprégnés par l'encre ont ensuite été irradiés sous UV à une longueur d'onde d'environ 365 nm (lampe UVKURE 120 LED - 365 nm, 1,5 kW, 12W/cm², Kelenn Technology, France). Les deux faces du support peuvent être irradiées. Le temps d'irradiation de chaque face du support est compris de 2s à 1 min.

### PARTIE 2 - TESTS MICROBIOLOGIQUES

Le but de ces expériences est de montrer les propriétés biocides, bactéricides et/ou bactériostatiques des matériaux obtenus par le procédé de l'invention.

Pour cela, les matériaux greffés avec les encres (obtenus selon l'expérience 2) sont, au préalable du greffage, lavés à l'eau, puis lavés à l'éthanol puis autoclavés (130 °C durant 20 min) avant de réaliser les tests de microbiologie. Afin de vérifier que le traitement d'autoclavage n'altère pas les propriétés biocides des encres, des tests microbiologiques ont été réalisés également sur des matériaux autoclavés après greffage.

### 2.1 : Protocoles de réalisation des tests de microbiologie

### 2.1.1. Souches bactériennes

Les tests microbiologiques ont été menés à partir des souches bactériennes suivantes :
A - Souches bactériennes utilisées en Laboratoire BSL1/ BSL2 (BSL : BioSafety Laboratory) :
   - *Escherichia coli BL21 star* (Gram -)
   - *Bacillus thuringiensis* forme végétative et sporulée (Gram +)
B - Souches bactériennes utilisées en Laboratoire BSL3 :
   - *Yersinia pestis* (Gram -)
   - *Bacillus anthracis* forme végétative (Gram +)

### 2.1.2. Protocole appliqué sur les cellules végétatives

Le protocole appliqué sur les cellules végétatives consiste à la mise en œuvre des étapes suivantes :

### Préculture

Prélever quelques colonies bactériennes (les bactéries ont été préalablement isolées sur des boites de LB (milieu Luria-Bertani) gélosées). Incuber toute la nuit à 37°C sous agitation dans du milieu de culture liquide approprié (LB).

### Culture initiale

Le but est d'obtenir une culture initiale qui correspond à une culture bactérienne en phase exponentielle à 10⁶ CFU (Colony Forming Unit)/mL qui sert pour la contamination des matériaux à tester.

Pour cela, diluer au 200ème la préculture dans du milieu de culture approprié (LB).

Incuber à 37°C sous agitation (environ 2 à 3 heures pour *E. coli* et *Bacillus spp., 6* heures pour *Y. pestis*)

Mesurer la DO à 600 nm jusqu'à obtenir une densité optique (DO) d'environ 0.4 (phase exponentielle).

Diluer dans du milieu de culture approprié (LB) pour obtenir 10⁶ CFU/mL.

Exemple : DO = 0.4 avec *E. coli.* Pour *E. coli* DO = 1 correspond à 5.10⁸ CFU/ mL. Donc DO = 0.4 correspond à 0.4^{∗}5.10⁸ = 2.10⁸ CFU/mL. Pour obtenir 10 mL d'une solution de concentration à 10⁷ CFU/mL : V = (10^{∗}10⁷)/(2.10⁸) =0,500 mL soit 500 µL. Ajouter 500 µL de la préculture à 9.5 mL de milieu (LB) --> 10⁷ CFU/mL. Diluer au 1/10ème pour obtenir 10⁶ CFU/mL. Correspondance DO/CFU similaire pour *E. coli, Y. pestis, Bacillus* végétatifs.

### Contamination

Inoculer les disques (tissu en coton) avec 30 µL de la culture initiale à 10⁶ CFU/mL. Mettre les boites de Pétri contenant les disques et le milieu de culture dans l'incubateur avec le système d'éclairage avec LED standard 4000K (Lexman Light 230 V, E14, 470 Lumen). Incuber à 30°C pendant 24H (Norme AATCC 100-2004) ou moins (1H, 30 min, 5 min), afin de déterminer le temps minimum d'efficacité, en atmosphère humide.

Pour les temps d'exposition courts, ne permettant pas l'exposition des disques au système d'éclairage avec LED, un autre protocole de test consiste à soumettre les boites de Pétri contenant les disques à la lumière naturelle durant 30 secondes dans une pièce où la température est régulée à 22°C.

### Contrôles

Pour chaque test bactériologique, 4 conditions (testées en double) dont 3 contrôles ont été testées :
(1) Disque non traité et à l'abri de la lumière
(2) Disque non traité exposé à la lumière
(3) Disque traité et à l'abri de la lumière
(4) Disque traité exposé à la lumière

Pour ce faire, les disques sont disposés dans des boîtes de Pétri stériles avec un mouchoir imbibé d'eau (atmosphère humide). Une des boîtes est exposée à la lumière, l'autre est mise à l'obscurité (recouverte de papier aluminium). L'exposition à la lumière est réalisée, pour le temps d'exposition de 30 secondes, par soumission des boites de Pétri contenant les disques à la lumière naturelle durant 30 secondes dans une pièce où la température est régulée ; pour les temps d'exposition de 24h, 1h, 30 min ou 5 min par incubation à 30°C dans un incubateur avec le système d'éclairage avec LED standard 4000K (Lexman Light 230 V, E14, 470 Lumen).

### Extraction des bactéries des échantillons

Mettre chaque disque dans un tube Eppendorf contenant 1 mL de tampon PBS (Phosphate Buffered Saline).

Récupérer le surplus du volume d'inoculum resté sur les boites de Pétri et l'insérer dans le tube Eppendorf contenant le disque et le tampon PBS. Incuber 30 minutes, à température ambiante, sous agitation à 200 rpm (révolutions par minute) et à l'abri de la lumière.

### Dénombrement

Réaliser des dilutions décimales pour chaque échantillon en tampon PBS. Déposer 100 µL de chaque dilution dans une boite de milieu LB gélosé. Etaler et incuber à 37 °C toute la nuit. Compter les colonies et déduire la concentration bactérienne.

### 2.1.3. Protocole appliqué sur des bactéries de forme sporulée

Les solutions de spores sont produites et conservées en eau distillée. Leur stabilité est évaluée tous les mois via numération par dilutions limites. La concentration de spores utilisée dans ces tests est de 10⁵ CFU/mL.

Les disques sont disposés dans des boîtes de Pétri stériles avec un mouchoir imbibé d'eau (atmosphère humide). Le volume d'inoculum pour la contamination est de 30µL. Une des boîtes est exposée à la lumière, l'autre est à l'obscurité (recouverte de papier aluminium). L'exposition des spores aux disques greffés est de 24h.

L'extraction des spores des échantillons se fait selon un protocole similaire à celui appliqué sur les cellules végétatives, excepté l'utilisation d'eau distillée à la place du PBS et l'ajout d'une étape de 30 secondes de sonication avant l'incubation de 30 minutes sous agitation.

Le protocole de dénombrement est identique à celui des cellules végétatives, à l'exception de l'utilisation d'eau distillée à la place du PBS.

### 2.2 : Résultats des tests de microbiologie

Les résultats microbiologiques obtenus à partir des matériaux de l'invention sont présentés dans les tableaux ci-dessous.

*2.2.1. Comparaison de l'action bactéricide de la porphyrine possédant une fonction arylazide décrite dans* BERTHELOT et al. (WO2018/069508*) et l'action de la protoporphyrine IX.*

Afin de comparer les propriétés bactéricides de la porphyrine arylazide décrite dans le brevet susnommé et une protoporphyrine IX (unique composant de l'encre A qui comprend une protoporphyrine mais ni ammonium ni cuivre), des disques de coton greffés avec ces deux types de porphyrines ont été testés (tableau 2) sur les bactéries Gram+ (B. *thuringiensis*) et Gram- (*E. coli*). La protoporphyrine IX présente une activité bactéricide plus importante que la porphyrine arylazide sur les bactéries Gram + et Gram-.
[Table 2]

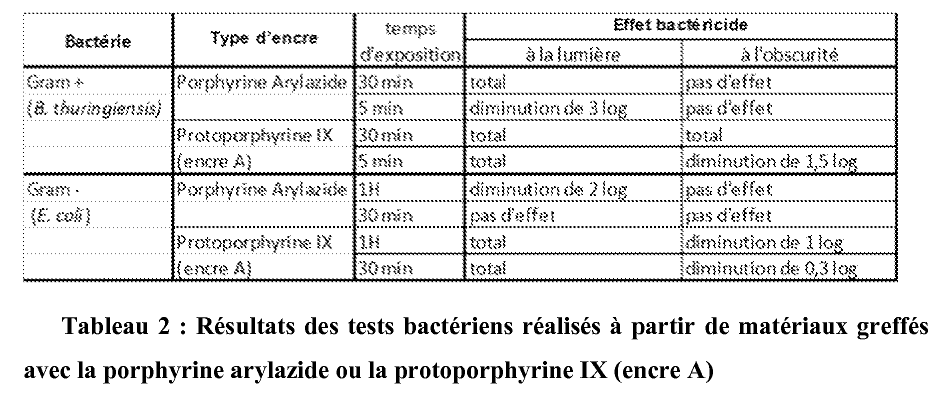

### 2.2.2. Tests sur les souches bactériennes des encres contenant une protoporphyrine IX, du cuivre et de l'ammonium quaternaire : les encres B et C

Pour les tests portant sur les souches bactériennes (Cf. Tableaux 3 et 4 ci-dessous), les résultats indiquent que les encres B et C ont une activité bactéricide totale à partir de 30 secondes de contact, que ce soit à lumière ou à l'obscurité sur les bactéries Gram+ (B. *thuringiensis*) et Gram- (*E. coli*). Des tests en laboratoire BSL3 démontrent l'activité bactéricide de l'encre C sur les agents *B. anthracis* et *Y. pestis* en 5 min. De plus, cette activité n'est pas altérée après un cycle d'autoclavage (130°C durant 20 min) des disques traités.
[Table 3]

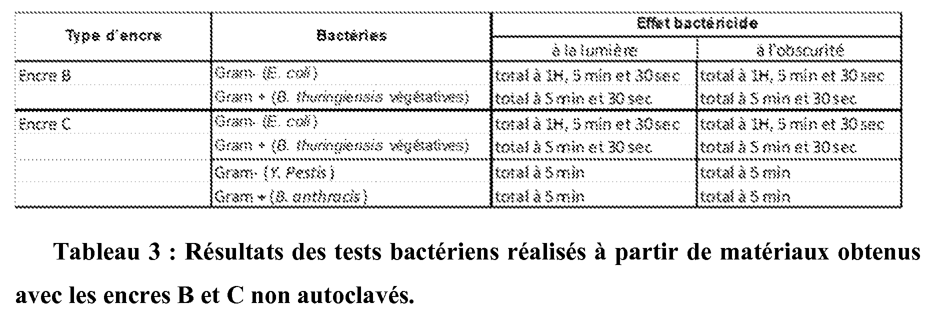

[Table 4]

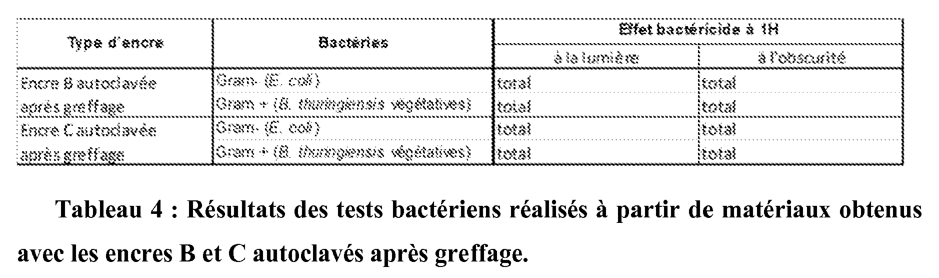

### 2.2.3. Résultats des tests sur les spores contenant une protoporphyrine IX, du cuivre et de l'ammonium quaternaire : les encres B et C

Pour les tests portant sur les spores bactériennes (Cf. Tableau 5 ci-dessous), les résultats indiquent que seule l'encre C a une activité sporicide à la lumière. La différence entre les deux encres vient de la nature de la protoporphyrine : le sel disodique de protoporphyrine IX a une action biocide sur les spores alors que la porphyrine diméthyl ester n'en a pas.
[Table 5]

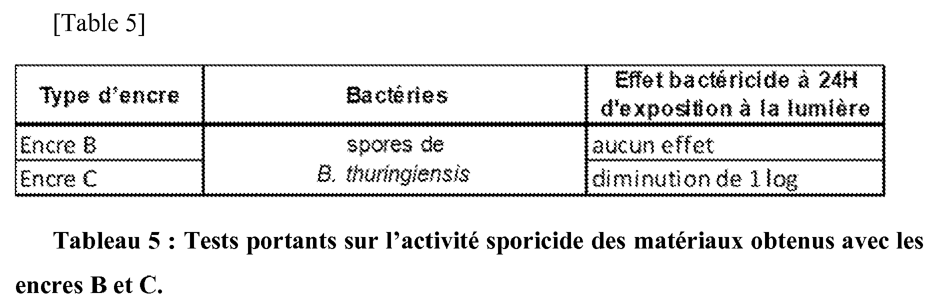

### 2.2.3. Tests de déconvolution de l'encre C sur les bactéries.

Afin de définir l'action bactéricide des différents principes actifs de l'encre ayant la plus grande capacité bactéricide et sporicide, l'encre C a été décomposée et chaque composant a été greffé séparément.

Pour cela, la bactérie modèle choisie pour ce test a été une bactérie Gram +, *B. thuringiensis.*

Les tests avec l'encre A, contenant uniquement le sel disodique de protoporphyrine IX, et présentés dans le Tableau 6 ont permis de démontrer que l'encre A ne présente pas d'activité bactéricide optimale dans l'obscurité. Le cuivre seul (Encre D) ou l'ammonium quaternaire seul (Encre E) présentent une activité bactéricide totale à la lumière et à l'obscurité. L'ajout de ces 2 composants à la protoporphyrine IX (Encre C) permet de restaurer une activité bactéricide totale à l'obscurité.

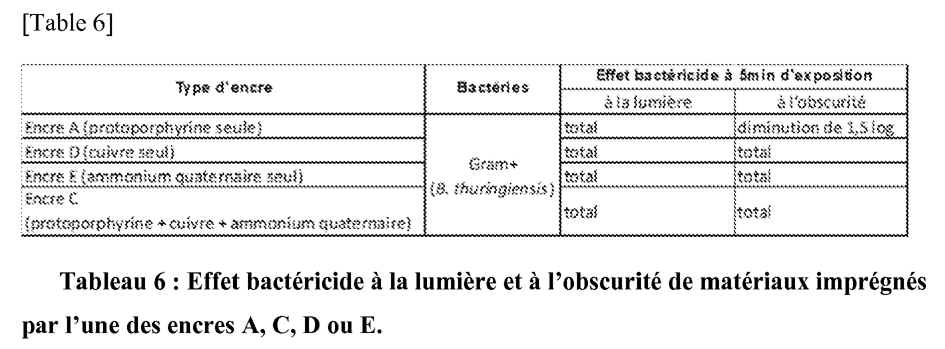

### 2.2.4. Tests de déconvolution de l'encre C sur les spores

Les tests de déconvolution de l'Encre C sur les spores de *B. thuringiensis* (Tableau 7), ont permis de démontrer que seules les encres possédant le sel disodique de la protoporphyrine IX présentent une action sporicide. Les encres D (cuivre seul) et E (ammonium quaternaire seul) n'ont pas d'action sporicide.

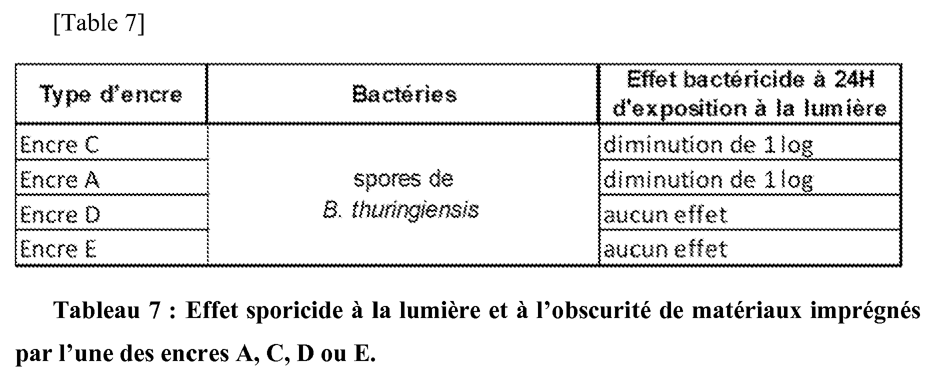

### 2.2.5. Optimisation des matières premières utilisées

Afin d'optimiser les matières premières utilisées, d'autres solvants support et des quantités variables de certains composés ont été testés (*Tableau 8*). [Table 8]

**Tableau 8 : Effet bactéricide à la lumière et à l'obscurité de matériaux imprégnés par l'encre F.**

| **Type d'encre** | **Bactéries** | **Effet bactéricide à 5 min d'exposition** | |
|---|---|---|---|
| | | **A la lumière** | **A l'obscurité** |
| Encre F | Gram - (*E.coli*) | total | total |
| | Gram + (*B. thuringiensis*) | total | total |

Le changement de solvant (eau/éthanol à la place du DMSO) et de quantités d'amorceur et de cuivre n'ont pas altéré la qualité du matériau déposé sur les cotons. Les propriétés bactéricides à 5 min d'exposition, à la lumière comme à l'obscurité, sur les bactéries Gram+ et Gram- sont conservées.

## Revendications

1. Procédé de préparation d'un matériau biocide, bactéricide et/ou bactériostatique, ledit procédé comprenant :
a. la préparation d'une solution précurseur de polymère comprenant :
i. au moins un monomère A ayant un groupe porphyrine et au moins une fonction polymérisable par voie radicalaire,
ii. au moins un monomère B polymérisable par voie radicalaire,
iii. un photo-amorceur,
iv. au moins l'un des monomères choisis parmi :
1. un monomère C comprenant une amine quaternaire et une fonction polymérisable par voie radicalaire ; et/ou
2. un monomère D comprenant du cuivre et une fonction polymérisable par voie radicalaire ;
b. la mise en contact de la solution précurseur de polymère obtenue en (a) avec un support, résultant en l'imprégnation dudit support avec ladite solution précurseur de polymère ; et
c. la mise en œuvre par irradiation UV, de la polymérisation de la solution précurseur de polymère imprégnée dans le support selon l'étape (b), ladite irradiation UV étant réalisée à une longueur d'onde d'absorption inférieure à la longueur d'onde d'absorption maximale λmax du monomère A;
d. optionnellement, l'activation par irradiation lumineuse du monomère A.

2. Le procédé selon la revendication 1, dans lequel le monomère A est une protoporphyrine, de préférence la diméthyl ester protoporphyrine ou le sel disodique de protoporphyrine.

3. Le procédé selon la revendication 1 ou 2, dans lequel le monomère C est choisi parmi les (méth)acrylates comprenant une amine quaternaire ; de préférence est le chlorure de (2-(acryloyloxy)éthyl)triméthylammonium.

4. Le procédé selon l'une quelconque des revendications 1 à 3, dans lequel le monomère D est choisi parmi les (méth)acrylates comprenant du cuivre ou les di(méth)acrylates comprenant du cuivre ; de préférence l'acrylate de cuivre ou le diméthacrylate de cuivre.

5. Le procédé selon l'une quelconque des revendications 1 à 4, dans lequel le photo-amorceur a une longueur d'onde d'absorption maximale comprise de 350 nm à 400 nm ; de préférence de 360 à 380 nm ; plus préférentiellement environ 365 nm.

6. Le procédé selon l'une quelconque des revendications 1 à 5, dans lequel la solution précurseur de polymère comprend en outre un solvant, de préférence choisi parmi les solvants polaires, plus préférentiellement un mélange eau/éthanol ou le diméthylsulfoxide (DMSO).

7. Solution précurseur d'un polymère biocide, bactéricide et/ou bactériostatique, ladite solution comprenant le mélange de :
a. au moins un monomère A ayant un groupe porphyrine et au moins une fonction polymérisable par voie radicalaire,
b. au moins un monomère B polymérisable par voie radicalaire,
c. un photo-amorceur,
d. au moins l'un des monomères choisis parmi :
i. un monomère C comprenant une amine quaternaire et une fonction polymérisable par voie radicalaire ; et/ou
ii. un monomère D comprenant du cuivre et une fonction polymérisable par voie radicalaire,
e. optionnellement, un solvant.

8. Un matériau biocide, bactéricide et/ou bactériostatique comprenant un support imprégné par une matrice polymère résultant de la polymérisation radicalaire d'une solution précurseur de polymère selon la revendication 7.

9. Utilisation de la solution précurseur de polymère selon la revendication 7 ou du matériau biocide, bactéricide et/ou bactériostatique selon la revendication 8, pour la préparation de vêtements de protection ou de revêtements de protection.

10. Utilisation non-thérapeutique de la solution précurseur de polymère selon la revendication 7 ou du matériau biocide, bactéricide et/ou bactériostatique selon la revendication 8, pour la stérilisation et/ou la décontamination d'une surface.

## Patentansprüche

1. Verfahren zur Herstellung eines bioziden, bakteriziden und/oder bakteriostatischen Materials, wobei das Verfahren umfasst:
a. Herstellen einer Polymer-Vorläuferlösung, welche umfasst:
i. mindestens ein Monomer A, das eine Porphyringruppe und mindestens eine radikalisch polymerisierbare Funktion aufweist,
ii. mindestens ein radikalisch polymerisierbares Monomer B,
iii. einen Photoinitiator,
iv. mindestens eines der Monomere, ausgewählt aus:
1. einem Monomer C, das ein quaternäres Amin und eine radikalisch polymerisierbare Funktion umfasst; und/oder
2. einem Monomer D, das Kupfer und eine radikalisch polymerisierbare Funktion umfasst;
b. Inkontaktbringen der bei (a) erhaltenen Polymer-Vorläuferlösung mit einem Träger, das zum Imprägnieren des Trägers mit der Polymer-Vorläuferlösung führt; und
c. Umsetzen der Polymerisation der gemäß Schritt (b) in den Träger imprägnierten Polymer-Vorläuferlösung durch UV-Bestrahlung, wobei die UV-Bestrahlung mit einer niedrigeren Absorptionswellenlänge als der maximalen Absorptionswellenlänge λmax des Monomers A ausgeführt wird;
d. gegebenenfalls Aktivieren durch Lichtbestrahlung des Monomers A.

2. Verfahren nach Anspruch **1**, wobei es sich bei dem Monomer A um ein Protoporphyrin, vorzugsweise um Dimethylester-Protoporphyrin oder um Dinatriumsalz von Protoporphyrin handelt.

3. Verfahren nach Anspruch **1** oder **2**, wobei das Monomer C ausgewählt ist aus (Meth)acrylaten, die ein quaternäres Amin umfassen; wobei es sich vorzugsweise um (2-(Acryloyloxy)ethyl)trimethylammoniumchlorid handelt.

4. Verfahren nach einem der Ansprüche **1** bis **3**, wobei das Monomer D ausgewählt ist aus (Meth)acrylaten, die Kupfer umfassen, oder Di(meth)acrylaten, die Kupfer umfassen; vorzugsweise aus Kupferacrylat oder Kupferdimethacrylat.

5. Verfahren nach einem der Ansprüche **1** bis **4**, wobei der Photoinitiator eine maximale Absorptionswellenlänge im Bereich von 350 nm bis 400 nm; vorzugsweise von 360 bis 380 nm; bevorzugter von etwa 365 nm aufweist.

6. Verfahren nach einem der Ansprüche **1** bis **5**, wobei die Polymer-Vorläuferlösung weiter ein Lösungsmittel, vorzugsweise ausgewählt aus den polaren Lösungsmitteln, bevorzugter eine Wasser-/Ethanol-Mischung oder Dimethylsulfoxid (DMSO) umfasst.

7. Vorläuferlösung eines bioziden, bakteriziden und/oder bakteriostatischen Polymers, wobei die Lösung die Mischung umfasst von:
a. mindestens einem Monomer A, das eine Porphyringruppe und mindestens eine radikalisch polymerisierbare Funktion aufweist,
b. mindestens einem radikalisch polymerisierbaren Monomer B,
c. einem Photoinitiator,
d. mindestens einem der Monomere, ausgewählt aus:
i. einem Monomer C, das ein quaternäres Amin und eine radikalisch polymerisierbare Funktion umfasst; und/oder
ii. einem Monomer D, das Kupfer und eine radikalisch polymerisierbare Funktion umfasst,
e. gegebenenfalls einem Lösungsmittel.

8. Biozides, bakterizides und/oder bakteriostatisches Material, das einen mit einer aus der radikalischen Polymerisation einer Polymer-Vorläuferlösung nach Anspruch 7 stammenden Polymermatrix imprägnierten Träger umfasst.

9. Verwendung der Polymer-Vorläuferlösung nach Anspruch **7** oder des bioziden, bakteriziden und/oder bakteriostatischen Materials nach Anspruch **8** zur Herstellung von Schutzbekleidung oder von Schutzüberzügen.

10. Nichttherapeutische Verwendung der Polymer-Vorläuferlösung nach Anspruch **7** oder des bioziden, bakteriziden und/oder bakteriostatischen Materials nach Anspruch **8** zur Sterilisierung und/oder Dekontaminierung einer Oberfläche.

## Claims

1. Process for preparing a biocidal, bactericidal and/or bacteriostatic material, said process comprising:
a. preparation of a polymer precursor solution comprising:
i. at least one monomer A having a porphyrin group and at least one radical polymerizable function,
ii. at least one radical polymerizable monomer B,
iii. a photoinitiator,
iv. at least one of the monomers chosen from:
1. a monomer C comprising a quaternary amine and a radical polymerizable function; and/or
2. a monomer D comprising copper and a radical polymerizable function;
b. contacting the polymer precursor solution obtained in (a) with a support, resulting in the impregnation of said support with said polymer precursor solution; and
c. the implementation by UV irradiation of the polymerization of the polymer precursor solution impregnated in the support according to step (b), said UV irradiation being carried out at an absorption wavelength less than the maximum absorption wavelength λmax of monomer A;
d. optionally, activation by light irradiation of monomer A.

2. The process according to claim **1**, wherein the monomer A is a protoporphyrin, preferably the protoporphyrin dimethylester or the disodium salt of the protoporphyrin.

3. The process according to claim **1** or claim **2**, wherein the monomer C is chosen from (meth) acrylates comprising a quaternary amine; preferably (2-(acryloyloxy)ethyl) trimethylammonium chloride.

4. The process according to any one of claims **1** to **3**, wherein the monomer D is chosen from (meth)acrylates comprising copper or di(meth)acrylates comprising copper; preferably copper acrylate or copper dimethaycrylate.

5. The process according to any one of claims **1** to **4**, wherein the photoinitiator has a maximum absorption wavelength ranging from 350 nm to 400 nm; preferably from 360 to 380 nm; more preferably about 365 nm.

6. The process according to any one of claims **1** to **5**, wherein the polymer precursor solution further comprises a solvent; preferably chosen from polar solvents, more preferably a water/ethanol mixture or dimethylsulfoxide (DMSO).

7. Precursor solution of a biocidal, bactericidal and/or bacteriostatic polymer, said solution comprising the mixture of:
a. at least one monomer A having a porphyrin group and at least one radical polymerizable function,
b. at least one radical polymerizable monomer B,
c. a photoinitiator,
d. at least one of the monomers chosen from:
i. a monomer C comprising a quaternary amine and a radical polymerizable function; and/or
ii. a monomer D comprising copper and a radical polymerizable function,
e. optionally, a solvent.

8. A biocidal, bactericidal and/or bacteriostatic material comprising a support impregnated with a polymer matrix resulting from the radical polymerization of a precursor polymer solution according to claim **7**.

9. Use of the polymer precursor solution according to claim **7** or of the biocidal, bactericidal and/or bacteriostatic material according to claim **8**, for the preparation of protective clothing or protective coatings.

10. Non-therapeutic use of the precursor polymer solution according to claim **7** or of the biocidal, bactericidal and/or bacteriostatic material according to claim 8, for sterilization and or decontamination of a surface.
